# Europäisches Patentamt

## European Patent Office

## Office européen des brevets

(11) Numéro de publication: **0 216 651**
**B1**

(12) **FASCICULE DE BREVET EUROPEEN**

(45) Date de publication du fascicule du brevet:
**26.04.89**

(21) Numéro de dépôt: **86401703.3**

(22) Date de dépôt: **30.07.86**

(51) Int. Cl.⁴: **B60R 25/02**

(54) Dispositif antivol pour colonne de direction de véhicule automobile.

(30) Priorité: **03.09.85 FR 8513085**

(43) Date de publication de la demande:
**01.04.87 Bulletin 87/14**

(45) Mention de la délivrance du brevet:
**26.04.89 Bulletin 89/17**

(84) Etats contractants désignés:
**AT BE CH DE GB IT LI LU NL SE**

(56) Documents cités:
**EP-A- 0 035 415**
**EP-A- 0 121 165**
**EP-A- 0 129 522**
**WO-A-83/04227**
**FR-A- 2 142 995**
**FR-A- 2 161 392**

(73) Titulaire: **ECIA - EQUIPEMENTS ET COMPOSANTS POUR L'INDUSTRIE AUTOMOBILE,
F-25400 Audincourt(FR)**

(72) Inventeur: **Hoblingre, André, 28 rue Vincent d'Indy,
F-25700 Valentigney(FR)**
Inventeur: **Barnabe, Jean-Pierre, 17 Combe Saint Germain, F-25700 Valentigney(FR)**

(74) Mandataire: **Polus, Camille, c/o Cabinet Lavoix 2, Place d'Estienne d'Orves, F-75441 Paris Cedex 09(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

Les dispositifs antivols de colonne de direction de véhicule automobile comportent actuellement un verrou qui est fixé sur la carrosserie du véhicule et dont le pêne s'emboîte dans une fente du tube-enveloppe de la colonne, ainsi que dans une fente correspondante d'un manchon solidaire de l'axe de volant.

Un tel dispositif est décrit par exemple dans le FR-A 2 142 995, qui a le même but que la présente invention et pour cela prévoit un dispositif antivol qui n'entraîne pas une rupture de la direction lors d'une tentative de vol mais interdit toutefois la conduite du véhicule.

La présente invention a en effet pour objet un dispositif antivol dans lequel le manchon comporte, à l'une de ses extrémités, des fentes longitudinales régulièrement espacées, qui sont enclenchées sur des saillies axiales, solidaires de l'axe de volant, plus courtes que les fentes du manchon et se rétrécissant vers l'extérieur.

Lorsque la colonne est verrouillée, la rotation du volant est contrecarrée par le contact des saillies et des fentes. Elle peut cependant être obtenue en exerçant un effort suffisamment important, mais cet effort doit être réitéré périodiquement, ce qui rend la conduite pratiquement impossible. Aucun risque de rupture de la colonne n'est toutefois à craindre.

Selon une autre caractéristique de l'invention, les saillies sont portées par une douille cannelée intérieurement, interposée entre l'axe de volant et le manchon.

Selon une autre forme de réalisation, les saillies sont portées par l'axe de volant lui-même. Le manchon peut également comporter des fentes longitudinales à son autre extrémité, des saillies étant prévues en regard de ces fentes.

La description ci-dessous de modes de réalisation donnés à titre d'exemples non limitatifs, et représentés aux dessins annexés, fera d'ailleurs ressortir les avantages et caractéristiques de l'invention.

Sur ces dessins:

– la fig. 1 est une vue en coupe longitudinale d'un dispositif antivol selon l'invention;
– la fig. 2 est une vue en coupe suivant la ligne 1–1 de la figure 1;
– la fig. 3 est une vue, analogue à la figure 2, d'une variante de réalisation;
– la fig. 4 est une vue en coupe longitudinale du dispositif antivol de l'invention, selon un second mode de réalisation;
– la fig. 5 est une vue, analogue à la figure 4, d'une autre variante de réalisation;
– la fig. 6 est une vue en perspective du dispositif antivol de la figure 5;
– la fig. 7 est une vue en coupe longitudinale d'une autre variante de réalisation de l'invention;
– la fig. 8 est une vue en coupe suivant la ligne 2–2 de la figure 7;
– la fig. 9 est une vue, analogue à la figure 8, d'une variante de réalisation;

– la fig. 10 est une coupe suivant la ligne 3–3 de la figure 7;
– la fig. 11 est une vue partielle, en coupe longitudinale, d'une autre variante de réalisation.

Le dispositif antivol suivant l'invention comporte, à l'intérieur du tube-enveloppe de la colonne de direction qui n'a pas été représenté pour simplifier les dessins, un manchon 1 rendu solidaire de l'axe de volant 2.

Le manchon 1 comporte, à l'une de ses extrémités, des fentes longitudinales 4 régulièrement espacées et est enclenché sur des saillies 6 formées sur la surface extérieure d'une douille 8 rendue solidaire de l'axe de volant 2 par des cannelures 10.

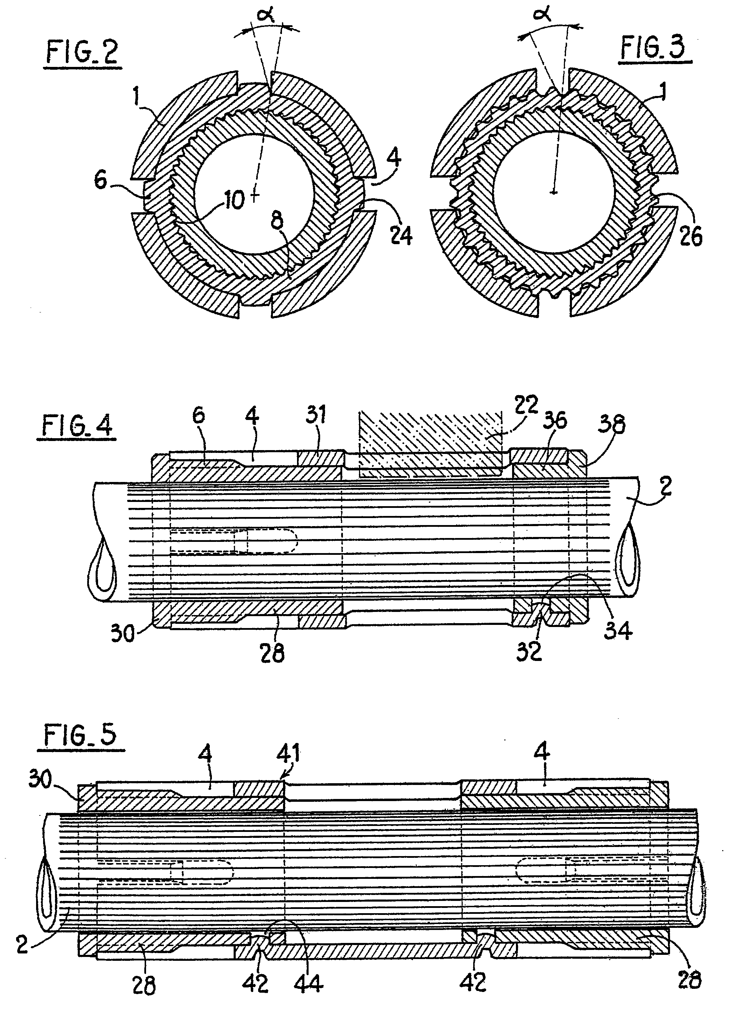

Dans le mode de réalisation représenté sur la figure 2, les saillies 6 sont constituées par quatre nervures axiales dont la dimension radiale décroît progressivement depuis l'extrémité extérieure de la douille 8 en direction de la partie fermée des fentes 4. Ces nervures sont plus courtes que les fentes correspondantes 4 et, en outre, leur section se rétrécie vers l'extérieur, leur section ayant par exemple une forme sensiblement trapézoïdale.

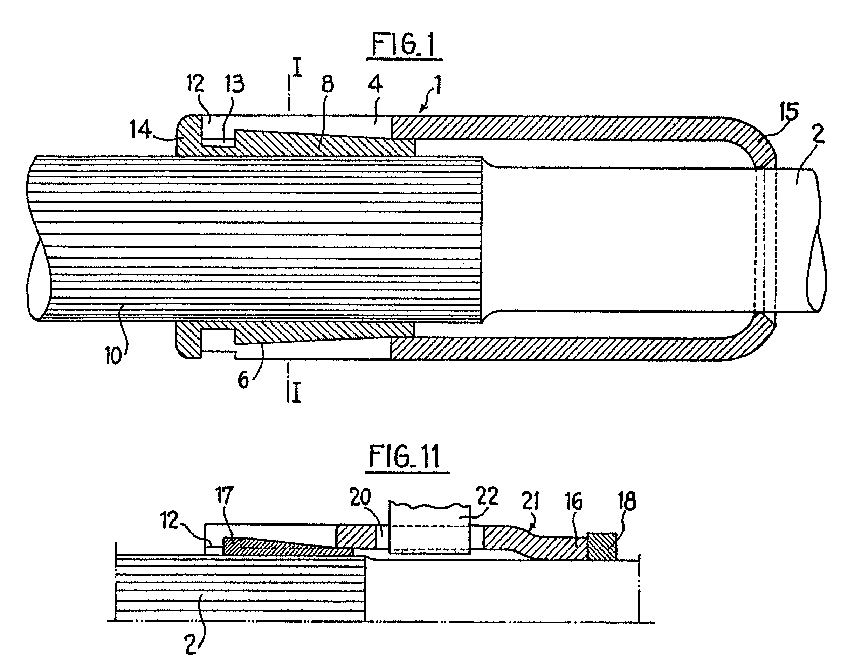

De préférence, comme le montre la figure 1, le manchon 1 comporte un rebord intérieur 12 qui s'emboîte dans une gorge 13 ménagée dans la douille 8, au voisinage d'un rebord extérieur 14 de cette dernière, de sorte que ces deux organes sont rendus solidaires axialement l'un de l'autre.

Dans certains cas toutefois le rebord extérieur 14 de la douille peut être supprimé, comme le montre la figure 11. Le rebord intérieur 12 du manchon 21 est alors simplement en butée contre l'extrémité de plus grande épaisseur 17 de la douille.

A son extrémité opposée aux fentes 4, le manchon 21 comporte une partie 16 de plus petit diamètre qui est serrée sur l'axe de volant 2. Eventuellement, une bague 18, fixée sur cet axe de volant, immobilise axialement l'ensemble du manchon 1 par rapport à cet axe.

Le manchon 1 comporte en outre au moins une fente 20 permettant le passage du pêne 22 d'un verrou fixé sur la carrosserie du véhicule, ce pêne traversant également une fente correspondante du tube-enveloppe de la colonne de direction.

Lorsque le pêne 22 est ainsi emboîté dans la fente 20, un effort exercé sur le volant pour le faire tourner et provoquer un déplacement en rotation de l'axe 2 doit surmonter le couple résistant dû à la coopération des saillies ou nervures 6 avec les bords des fentes 4, et permettre aux saillies d'écarter la paroi du manchon pour se déplacer par rapport à ce dernier. L'effort à exercer pour obtenir un tel déplacement est donc extrêmement important et peut facilement correspondre à une valeur au moins égale à celle exigée par les normes de sécurité.

Lorsque ce couple est surmonté, les saillies 6 pénètrent dans le manchon et glissent sur sa face interne. L'axe 2 peut tourner avec un couple résistant minimum jusqu'au moment où les saillies 6 atteignent les fentes suivantes et opposent à nouveau à la rotation le couple maximum. Cette variation périodique du couple rend la conduite du véhicule pratiquement impossible mais ne crée aucun risque de rupture de la colonne.

La forme et notamment la section droite des nervures sont choisies en fonction du couple maximum désiré. Par exemple, les flancs 24 des nervures 6 ont, par rapport au rayon de la douille 8, une inclinaison α déterminée en fonction de ce couple.

Bien entendu, le nombre des nervures 6 ainsi que leur longueur peuvent varier. Par exemple, les quatre nervures 6 peuvent être remplacées, comme le montre la figure 3, par une série de cannelures 26 ayant des sections droites triangulaires, ou arrondies. Comme les nervures 6, ces cannelures ont une longueur inférieure à celle des fentes 4, la longueur de contact entre les saillies et les fentes étant choisie en fonction du couple résistant minimum désiré, de même que la dimension radiale des saillies.

Les cannelures 26, de même que les nervures 6, peuvent également être formées sur une douille 28, telle que celle représentée sur la figure 4, comportant un rebord extérieur 30 de butée axiale contre le manchon, qui remplace le rebord 12 du manchon 1.

Par ailleurs, dans le mode de réalisation représenté sur cette figure 4, l'extrémité du manchon 31 opposée aux fentes 4 a une forme cylindrique de même diamètre que le reste du manchon et comporte simplement un ou plusieurs bossages intérieurs 32, par exemple semi-découpés, qui pénètrent chacun dans un trou correspondant 34 d'une seconde douille cannelée 36, interposée comme la première entre l'axe de volant 2 et le manchon 31. Cette douille 36 comporte de préférence un rebord 38 analogue au rebord 30 de la douille 28.

Dans ce dispositif, le ou les bossages 32 assurent un blocage du manchon 31 par rapport à l'axe de volant 2 et résistent à toute tentative d'entraînement en rotation du manchon 31 tant que l'effort exercé ne dépasse pas le couple résistant de réglage. Lorsque ce couple est atteint, les bossages se rompent et ce sont les nervures 6 ou 26 qui, en coopérant avec les fentes 4, interdisent la conduite du véhicule. Le dispositif fonctionne alors de la même manière que celui de la figure 1.

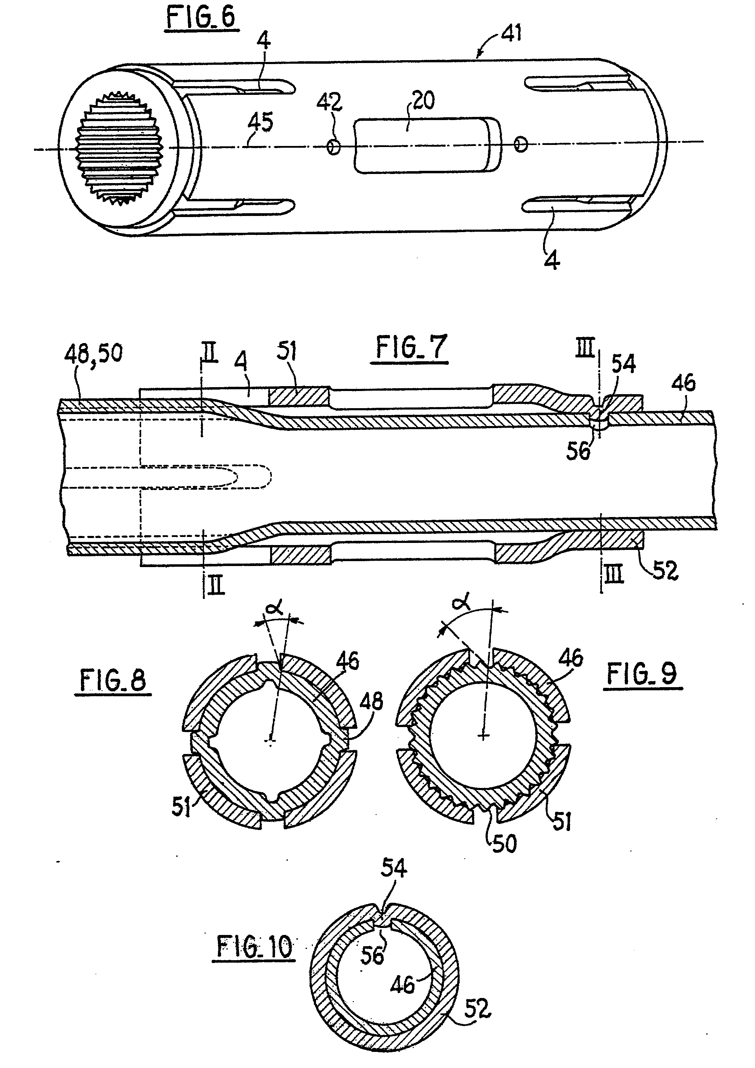

Dans d'autres cas, pour assurer une retenue complémentaire, le dispositif peut comporter, comme le montrent les figures 5 et 6, un manchon 41 dont les deux extrémités sont réalisées de la même manière et comportent, par suite, des fentes 4 régulièrement réparties sur leur périphérie. Une douille 28 est alors montée à chaque extrémité du manchon 41, de façon que ses nervures 6 ou 26 coopèrent avec les fentes correspondantes.

Dans le mode de réalisation représenté, le manchon 41 comporte en outre au moins un bossage semi-découpé 42 de chaque côté de la fente 20 de passage du pêne du verrou. Chacun des bossages 42 est emboîté dans un trou 44 de la douille 24 correspondante.

De la même manière que les bossages 32 de la figure 4, chacun des bossages 42 de ce mode de réalisation assure le blocage complet du manchon 41 par rapport à l'axe de volant 2 et cède à la manière d'un fusible lorsque le couple de sécurité est atteint. Le déplacement ultérieur en rotation de l'axe dans le manchon 41 est ensuite freiné de manière périodique par la coopération des fentes 4 avec les nervures 6 ou 26 et la résistance des portions 45 du manchon qui séparent ces fentes.

Selon une variante de réalisation représentée sur les figures 6 à 10, les saillies de freinage du manchon sont formées directement dans la paroi d'un axe de volant 46 réalisé au moyen d'un tube creux. Ces saillies peuvent être constituées soit, comme représenté sur la figure 8, par des nervures 48 analogues aux nervures 6 de la figure 2, obtenues par exemple par déformation de la paroi du tube, soit, comme le montre la figure 9, par des cannelures 50 analogues aux cannelures 26 et ayant des sections droites triangulaires, ou arrondies. Dans tous les cas, les saillies 48, 50 coopèrent avec les fentes 4 d'un manchon 51 monté autour de l'axe 46, mais ne s'étendent pas sur toute la longueur de ces fentes et ont une épaisseur radiale progressivement décroissante. A son extrémité opposée aux fentes 4, le manchon 51 est prolongé par une portion de plus petit diamètre 52, qui est de préférence munie d'un bossage intérieur semi-découpé 54 pénétrant dans un trou 56 de la paroi du tube 46.

Le manchon 51 est ainsi rigoureusement solidaire de l'axe de volant 46, de telle sorte qu'il est impossible à qui que ce soit de faire tourner l'axe de volant 46 lorsque ce manchon est retenu par le pêne 22 du verrou antivol du véhicule. Toutefois, lorsque l'effort exercé sur le volant 46 atteint une valeur trop importante, le bossage 54 cède de la même manière que les bossages 32 ou 42 et permet de déplacer le volant contre l'action combinée des nervures 48 ou 50 et des fentes 4. Le véhicule est cependant impossible à conduire de manière normale, car l'effort à exercer pour faire tourner le volant varie périodiquement entre des valeurs extrêmement différentes les unes des autres.

Le dispositif antivol assure donc au propriétaire du véhicule une sécurité importante sans risque de rupture ni de l'axe de volant ni du tube-enveloppe de la colonne de direction, de sorte que le véhicule peut être réutilisé normalement même après une tentative de vol.

Bien entendu des modifications peuvent être apportées aux modes de réalisation qui viennent d'être décrits. Par exemple, le manchon 1, 31 ou 51 pourrait avoir deux extrémités fendues identiques et coopérer avec deux douilles semblables 8 ou 28, ou avec deux portions cannelées de l'axe. De même, le manchon 51 pourrait, comme le manchon 1, être dépourvu de bossage 54, son extrémité de petit diamètre 52 étant simplement en appui sur l'axe 46.

## Revendications

1. Dispositif antivol pour colonne de direction de véhicule, comportant un verrou qui est fixé à la carrosserie, dont le pêne (22) s'emboîte dans une fente du tube-enveloppe de la colonne et dans une fente (20) correspondante d'un manchon rendu solidaire de l'axe de volant (2, 46), caractérisé en ce que le manchon (1, 21, 31, 41, 51) comporte, à l'une de ses extrémités, des fentes longitudinales (4) régulièrement espacées, qui sont enclenchées sur des saillies axiales (6, 48, 50) solidaires de l'axe de volant (2, 46), plus courtes que les fentes (4) et se rétrécissant vers l'extérieur.

2. Dispositif suivant la revendication 1, caractérisé en ce que les saillies (6) sont portées par une douille cannelée intérieurement (8, 28), interposée entre l'axe de volant (2) et le manchon (1, 31, 41).

3. Dispositif suivant la revendication 1, caractérisé en ce que les saillies (48, 50) sont formées dans la paroi de l'axe de volant (46).

4. Dispositif suivant l'une des revendications précédentes, caractérisé en ce que les saillies sont constituées par des nervures espacées (6, 48) correspondant chacune à l'une des fentes (4).

5. Dispositif suivant l'une des revendications 1 à 3, caractérisé en ce que les saillies sont formées par des cannelures extérieures (26, 50) ayant une section triangulaire ou arrondie.

6. Dispositif suivant l'une des revendications précédentes, caractérisé en ce que le manchon (1, 21, 51) est prolongé à son extrémité opposée aux fentes (4) par une portion de plus petit diamètre (16, 52) en contact avec la surface de l'axe de volant (2, 46).

7. Dispositif suivant l'une des revendications 1 à 5, caractérisé en ce que le manchon comporte, à ses deux extrémités, des fentes longitudinales (4) enclenchées sur des saillies solidaires de l'axe de volant.

8. Dispositif suivant la revendication 7, caractérisé en ce qu'il comporte deux douilles (8, 28, 36) interposées entre les deux extrémités du manchon et l'axe de volant.

9. Dispositif suivant l'une des revendications précédentes, caractérisé en ce que le manchon comporte au moins un bossage interne (32, 42) de blocage, pénétrant dans un trou correspondant solidaire de l'axe de volant.

10. Dispositif suivant la revendication 9, caractérisé en ce que le trou de réception du bossage de blocage est percé dans une douille intermédiaire (8, 28).

11. Dispositif suivant la revendication 9, caractérisé en ce que le trou (56) de blocage du bossage du manchon est percé dans la paroi de l'axe de volant (46).

12. Dispositif suivant l'une des revendications précédentes, caractérisé en ce que la douille comporte un rebord extérieur (30) de blocage axial du manchon.

13. Dispositif suivant l'une des revendications 1 à 11, caractérisé en ce que le manchon comporte un rebord interne (12) de blocage axial par rapport à la douille (8).

## Claims

1. An anti-theft device for the steering column of a vehicle comprising a locking mechanism which is attached to the body work and whose catch bold (22) fits into a slot in the casing tube of the column and into a corresponding slot (20) in a sleeve made integral with the steering wheel shaft (2, 46), characterized in that the sleeve (1, 21, 31, 41, 51) is formed at one of its ends with regularly spaced-out longitudinal slots (4) which engage over axial projections (6, 48, 50) which are integral with the steering wheel shaft (2, 46) and are shorter than the slots (4) and narrow down in the outward direction.

2. A device according to claim 1, characterized in that the projections (6) are borne by an internally splined bush (8, 28) which is interposed between the steering wheel shaft (2) and the sleeve (1, 31, 41).

3. A device according to claim 1, characterized in that the projections (48, 50) are formed in the wall of the steering wheel shaft (46).

4. A device according to any of the preceding claims, characterized in that the projections are formed by spaced-out ribs (6, 48) each corresponding to one of the slots (4).

5. A device according to one of claims 1 to 3, characterized in that the projections are formed by external splines (26, 50) of triangular or rounded cross-section.

6. A device according to any of the preceding claims, characterized in that the sleeve (1, 21, 51) is extended at its end opposite the slots (4) by a portion (16, 52) of smaller diameter in contact with the surface of the steering wheel shaft (2, 46).

7. A device according to one of claims 1 to 5, characterized in that the sleeve is formed at its two ends with longitudinal slots (4) engaging over projections integral with the steering wheel shaft.

8. A device according to claim 7, characterized in that it comprises two bushes (8, 28, 36), interposed between the two ends of the sleeve and the steering wheel shaft.

9. A device according to any of the preceding claims, characterized in that the sleeve comprises at least one inner blocking boss (32, 42) which enters a matching hole made in the steering wheel shaft.

10. A device according to claim 9, characterized in that the hole receiving the blocking boss is made in an intermediate bush (8, 28).

11. A device according to claim 9, characterized in that the hole (56) blocking the boss of the sleeve is made in the wall of the steering wheel shaft (46).

12. A device according to any of the preceding claims, characterized in that the bush has an outer rim (30) for blocking the sleeve axially.

13. A device according to any of claims 1 to 11, characterized in that the sleeve has an inner rim (12) for blocking the sleeve axially in relation to the bush (8).

## Patentansprüche

1. Sicherungsvorrichtung gegen Diebstahl für Fahrzeuglenksäule, bestehend aus einer an der Karosserie befestigten Verriegelungsvorrichtung, deren Riegel (22) sich in einen Schlitz des Hüllrohrs der Säule und in einen entsprechenden Schlitz (20) einer mit der Lenkradachse (2, 46) fest verbundenen Hülse einschiebt, dadurch gekennzeichnet, daß die Hülse (1, 21, 31, 41, 51) an einer ihrer Enden in gleichmäßigen Abständen Schlitze (4) in Längsrichtung aufweist, die auf axialen, mit der Lenkradachse (2, 46) fest verbundenen Vorsprüngen (6, 48, 50) einrasten, die kürzer sind, als die Schlitze (4) und sich nach außen verjüngen.

2. Vorrichtung nach Patentanspruch 1, dadurch gekennzeichnet, daß die Vorsprünge (6) von einer zwischen Lenkradachse (2) und Hülse (1, 31, 41) eingefügten, innen gerillten Buchse (8, 28) getragen werden.

3. Vorrichtung nach Patentanspruch 1, dadurch gekennzeichnet, daß die Vorsprünge (48, 50) aus der Wand der Lenkradachse (46) geformt werden.

4. Vorrichtung nach einem der vorhergehenden Patentansprüche, dadurch gekennzeichnet, daß die Vorsprünge aus in Abständen voneinander angeordneten, jeweils einem der Schlitze (4) entsprechenden Rippen (6, 48) bestehen.

5. Vorrichtung nach einem der Patentansprüche 1 bis 3, dadurch gekennzeichnet, daß die Vorsprünge durch äußere Rillen (26, 50) mit dreieckigem oder abgerundetem Querschnitt gebildet werden.

6. Vorrichtung nach einem der vorhergehenden Patentansprüche, dadurch gekennzeichnet, daß die Hülse (1, 21, 51) an ihrem den Schlitzen (4) gegenüberliegenden Ende durch einen Abschnitt mit kleinerem Durchmesser (16, 52) fortgesetzt wird, der mit der Oberfläche der Lenkradachse (2, 46) in Berührung steht.

7. Vorrichtung nach einem der Patentansprüche 1 bis 5, dadurch gekennzeichnet, daß die Hülse an ihren beiden Enden in mit der Lenkradachse fest verbundene Vorsprünge einrastende Schlitze (4) in Längsrichtung aufweist.

8. Vorrichtung nach Patentanspruch 7, dadurch gekennzeichnet, daß sie zwei zwischen die beiden Enden der Hülse und die Lenkradachse eingefügte Buchsen (8, 28, 36) aufweist.

9. Vorrichtung nach einem der vorhergehenden Patentansprüche, dadurch gekennzeichnet, daß die Hülse mindestens einen in ein entsprechendes, mit der Lenkradachse fest verbundenes Loch eintretenden, inneren Sperrbuckel (32, 42) aufweist.

10. Vorrichtung nach Patentanspruch 9, dadurch gekennzeichnet, daß das Loch zur Aufnahme des Sperrbuckels sich in einer Zwischenbuchse (8, 28) befindet.

11. Vorrichtung nach Patentanspruch 9, dadurch gekennzeichnet, daß sich das Loch (56) zur Sperrung des Buckels der Hülse in der Wand der Lenkradachse (46) befindet.

12. Vorrichtung nach einem der vorhergehenden Patentansprüche, dadurch gekennzeichnet, daß die Buchse einen äußeren Randanschlag (30) zur Sperrung der Hülse in Achsenrichtung aufweist.

13. Vorrichtung nach einem der Patentansprüche 1 bis 11, dadurch gekennzeichnet, daß die Hülse einen inneren Randanschlag (12) zur Sperrung in Achsenrichtung relativ zur Buchse (8) aufweist.

FIG.1

FIG.11

FIG.2

FIG.3

FIG.4

FIG.5

FIG. 6

FIG. 7

FIG. 8

FIG. 9

FIG. 10